(19) Europäisches Patentamt
European Patent Office
Office européen des brevets

(11) **EP 3 226 672 B2**

(12) **NOUVEAU FASCICULE DE BREVET EUROPEEN**
Après la procédure d'opposition

(45) Date de publication et mention de la décision concernant l'opposition:
**27.07.2022 Bulletin 2022/30**

(45) Mention de la délivrance du brevet:
**28.11.2018 Bulletin 2018/48**

(21) Numéro de dépôt: **15804457.8**

(22) Date de dépôt: **02.12.2015**

(51) Classification Internationale des Brevets (IPC):
**A01B 63/10** (2006.01)     **A01D 41/14** (2006.01)
**A01D 45/02** (2006.01)

(52) Classification Coopérative des Brevets (CPC):
**A01B 63/10; A01D 47/00**

(86) Numéro de dépôt international:
**PCT/EP2015/078386**

(87) Numéro de publication internationale:
**WO 2016/087529 (09.06.2016 Gazette 2016/23)**

(54) **SYSTÈME ET PROCÉDÉ D'AJUSTEMENT AUTOMATIQUE DE LA HAUTEUR D'UN OUTIL AGRICOLE AU MOYEN D'UNE RECONSTRUCTION 3D**

SYSTEM UND VERFAHREN ZUR AUTOMATISCHEN HÖHENVERSTELLUNG EINES LANDWIRTSCHAFTLICHEN ANBAUGERÄTS MIT 3D-REKONSTRUKTION

SYSTEM AND METHOD FOR THE AUTOMATIC ADJUSTMENT OF THE HEIGHT OF AN AGRICULTURAL IMPLEMENT USING 3D RECONSTRUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1462003**

(43) Date de publication de la demande:
**11.10.2017 Bulletin 2017/41**

(73) Titulaire: **Commissariat à l'Énergie Atomique et aux Énergies Alternatives**
**75015 Paris (FR)**

(72) Inventeurs:
• **BRIQUET-KERESTEDJIAN, Nolwenn**
**75014 Paris (FR)**

• **COLLEDANI, Frédéric**
**91300 Massy (FR)**
• **LELONG, Baptiste**
**63730 Les Martres de Veyre (FR)**
• **SAYD, Patrick**
**91140 Villebon sur Yvette (FR)**

(74) Mandataire: **Brevalex**
**95, rue d'Amsterdam**
**75378 Paris Cedex 8 (FR)**

(56) Documents cités:
EP-A1- 1 269 823     EP-A2- 2 340 701
WO-A1-2014/108550     AU-A- 5 387 473
DE-A1- 4 411 646     US-A1- 2013 345 937
US-A1- 2014 236 381     US-B2- 8 381 502

EP 3 226 672 B2

**Description**

**DOMAINE TECHNIQUE**

Le domaine de l'invention est celui des systèmes robotiques agricoles. L'invention vise plus particulièrement un système permettant d'ajuster automatiquement la position d'un outil agricole, tel qu'un outil de coupe ou d'arrachage de végétaux. Elle trouve en particulier application dans l'automatisation des opérations de castration mécanique des champs de production de maïs semence.

**ÉTAT DE LA TECHNIQUE ANTÉRIEURE**

Le maïs est une plante autogame fortement soumise à l'effet d'hétérosis, c'est-à-dire à l'amélioration des capacités et de la vigueur de la plante sous forme hybride ou hétérozygote par rapport à la plante sous forme homozygote. Les sélectionneurs cherchent donc à croiser deux lignées génitrices homozygotes afin d'obtenir une combinaison hybride plus productive et plus vigoureuse at aux caractéristiques agronomiques intéressantes. La plante de maïs est monoïque, constitué d'une inflorescence mâle, appelée panicule qui se trouve au sommet de la plante et est responsable de l'émission de pollen, et d'une inflorescence femelle se situant à mi-hauteur de la plante, à la base d'une feuille, cette inflorescence femelle étant composée de stigmates ou soies réceptrices qui sont fécondées par le pollen, et conduisent à la formation de l'épi.

La production de semence hybride est réalisée en cultivant dans une même parcelle, généralement sur des lignes intercalées, des plantes des deux lignées parentes de l'hybride. La panicule de la lignée génitrice femelle est écimée avant floraison pour que ces plantes soient fécondées par le pollen de la lignée génitrice mâle. Les épis récoltés sur cette lignée génitrice femelle portent ainsi les grains hybrides qui sont commercialisés. La production d'hybrides ne se limite pas à l'obtention d'hybrides simples issus du croissement de deux lignées de maïs, et peut consister au croisement d'un hybride et d'une lignée (hybride trois voies) ou au croisement de deux hybrides (hybride double).

L'écimage de la panicule mâle sur les géniteurs femelles avant la floraison est ainsi une étape essentielle du processus de production de semences de maïs hybride. En effet, la présence de pollen même en faible quantité entraine des autofécondations sur ces géniteurs femelles et une contamination dans la production d'hybrides. Cet écimage était traditionnellement réalisé manuellement. Le coût en main d'oeuvre engendré par cette étape étant important, on a cherché à mécaniser cette étape avec différents outils, dont des couteaux destinés à couper la cime des plantes et des rouleaux destinés à la panicule ou le cornet.

Le processus de castration mécanique peut être réalisé soit avec un ou plusieurs passages de couteaux uniquement, soit en deux temps. Dans un premier temps, un passage aux couteaux est effectué sur les rangs géniteurs femelles : des lames tournantes coupent le sommet de la plante mâle. La hauteur de coupe idéale est située aux trois quarts du cornet, c'est-à-dire l'ensemble de feuilles entourant la panicule, à partir de sa cime ou aux trois quarts de la panicule si celle-ci dépasse du cornet. Entre deux et cinq jours plus tard, lorsque la panicule a un peu repoussé (2 à 5 cm) mais avant qu'elle soit suffisamment ouverte pour émettre du pollen, un arrachage aux rouleaux ou aux pneus est réalisé. L'objectif est d'attraper la panicule avec les rouleaux ou les pneus en arrachant le moins possible le cornet ou les feuilles qui se trouveraient encore autour. Pour cela, il faut placer les rouleaux à la base de la panicule tout en restant au-dessus des feuilles. La première coupe a pour but de débroussailler le rang afin qu'ensuite la panicule qui a une croissance plus rapide que le restant de la plante dépasse du feuillage. L'objectif de la deuxième coupe est d'arracher le reste de la panicule et d'éliminer ainsi tout risque d'autofécondation.

Au cours de ces opérations, l'agriculteur évalue visuellement la hauteur de coupe optimale de la panicule, depuis la nacelle de sa machine et contrôle la hauteur des outils de coupe ou d'arrachage. Généralement, deux rangs sont coupés simultanément à la même hauteur ce qui permet de gagner du temps mais risque de pénaliser la coupe d'un des deux rangs si les plantes ne sont pas de hauteur homogène. La qualité de la coupe est donc limitée par la réactivité du conducteur mais aussi par la précision que permet l'architecture actuelle de la machine. En conséquence, de nombreuses panicules ne sont pas coupées à la bonne hauteur. A l'issue des deux étapes de la castration mécanique, seules 70 à 80% des panicules sont totalement éliminées.

Il est ensuite nécessaire de compléter cette étape par une étape de castration manuelle des panicules restantes, et des parties restantes des panicules coupées lorsque la coupe n'a pas permis l'élimination totale de la panicule, afin de respecter les normes définies par le GNIS (Groupement National Interprofessionnel des Semences et plants) relatives au taux de pureté à respecter pour la production de maïs semence. Cette étape fastidieuse est réalisée par des saisonniers et représente un cout pour le producteur.

On cherche donc à réaliser ces opérations de castration mécanique de manière automatisée afin d'en améliorer le rendement, d'en réduire les coûts et d'en diminuer la pénibilité. Dans tous les systèmes de castration mécanique actuellement disponibles, l'élimination de la panicule est indissociable de l'élimination de feuilles notamment les feuilles du cornet. Cette élimination de matière végétale pénalise la plante dans son développement futur et impacte le rendement final de la culture. L'amélioration des systèmes de castration mécanique est donc un réel enjeu en machinisme agricole, le but étant d'optimiser l'arrachage de la panicule tout en minimisant l'élimination de végétation

Plusieurs approches proposent une solution d'ajustement automatique de la hauteur de coupe avec un capteur de mesure propre à chaque rang.

Le système proposé par le brevet US 4,197,691 utilise un capteur de mesure constitué de tiges verticales juxtaposées montées sur un arbre pivotant plus ou moins au contact des feuilles ce qui déclenche l'envoi d'un signal de montée ou de descente. Cependant, ce système de capteur par contact requiert un ajustement permanent de la hauteur de coupe. De plus, deux rangs sont toujours coupés simultanément à une hauteur commune.

D'autres approches proposent des capteurs de mesure de distances vues de dessus, comme pour le système proposé par le brevet US 4,507,910 qui étudie la mesure et le contrôle de hauteurs lors d'une récolte par une moissonneuse. Le capteur utilisé est un capteur à ultrason situé en amont de la roue batteuse. Il est placé au-dessus des récoltes et mesure la distance relative entre les récoltes et le capteur. Puis un signal est envoyé pour ajuster la hauteur de la roue batteuse par rapport à la hauteur désirée pour la récolte.

Le modèle proposé par le brevet US 8,381,502 est semblable au système précédent mais est adapté à une machine agricole de castration de maïs. Des photocellules placées en amont au-dessus des pieds de maïs repèrent le sommet des feuilles de deux rangs à la fois, puis envoient un signal de montée ou de descente pour venir couper les deux rangs à une hauteur commune. Du fait des différences de hauteurs, de la rugosité du sol et de la vitesse du véhicule, le système tente en permanence d'ajuster la consigne afin de maintenir une hauteur de coupe uniforme.

On connaît par ailleurs un système proposé par la SARL Duissard qui repose sur deux lots de cellules photoélectriques émettrices/réceptrices placés en amont des outils de coupe et situées à 13cm l'un en-dessous de l'autre, de part et d'autres de deux rangs. Ces cellules fonctionnent en détection directe : un faisceau infrarouge est émis par la cellule photoélectrique tandis qu'un réflecteur, situé en face, réfléchit le faisceau vers la cellule qui le réceptionne. Si du maïs se trouve sur le parcours du faisceau, alors celui-ci ne sera pas réceptionné par la cellule photoélectrique. La hauteur maximale est détectée lorsque la cellule inférieure voit du maïs (faisceau obstrué par le maïs donc non-perçu par la cellule inférieure) et que la cellule supérieure n'en voit pas (faisceau perçu par la cellule supérieure), à la précision près de l'écart entre les deux photocellules soit 13 cm. Ainsi, lorsque les deux cellules voient du maïs (les deux faisceaux sont obstrués) alors la hauteur de coupe est trop basse et un vérin s'allonge pour que le bras portant les outils de coupe remonte. A l'inverse, lorsque qu'aucune des deux cellules ne voient du maïs (les deux faisceaux sont réceptionnés par les cellules) alors la hauteur de coupe est trop haute et la tige du vérin rentre pour que le bras s'abaisse. L'installation d'une temporisation est nécessaire pour conserver la consigne pendant plusieurs secondes car le temps de détection et de l'envoi de la consigne sont trop brefs par rapport au temps nécessaire au déplacement du bras.

Ce système envoie ainsi une consigne « tout ou rien » à l'actionneur (montée ou descente) à cause de la présence de seulement deux photocellules. Le système tente donc en permanence d'ajuster la hauteur de coupe avec des consignes répétées et parfois contraires ce qui le sollicite fortement.

Par ailleurs dès que les cellules voient du vide, par exemple entre deux pieds de maïs, l'ensemble du bras va descendre pour devoir remonter aussitôt après au niveau du pied suivant. De même, à la fin d'un rang l'ensemble du système va descendre et probablement rater les premiers pieds du rang suivant.

Le degré de précision est par ailleurs limité par l'espacement vertical entre les deux lots de photocellules, soit 13 cm. Les cellules traitent en outre l'information pour deux rangs simultanément donc le pied de maïs du rang le plus bas sera coupé trop haut. Enfin, l'encombrement du système global reste un problème pour les agriculteurs.

Le document AU 53874 73 A divulgue également un système de l'art antérieur.

## EXPOSÉ DE L'INVENTION

L'invention vise à améliorer les systèmes existants d'automatisation des opérations de coupe ou d'arrache de végétaux, et propose pour ce faire un système d'ajustement de la hauteur d'un outil agricole selon la revendication 1.

Certains aspects préférés mais non limitatifs de ce système sont les suivants :

- le système d'imagerie est un système d'imagerie stéréoscopique comprenant deux caméras montées de manière à pouvoir imager la même scène à partir de deux points de vue distants, et l'unité de traitement informatique est configurée pour élaborer la reconstruction 3D à partir d'un couple d'images stéréoscopiques délivrées par les caméras ;
- l'au moins une caméra du système d'imagerie est une caméra temps de vol, et l'unité de traitement informatique est configurée pour réaliser une mesure de temps de vol entre la scène imagée et la caméra.
- la reconstruction 3D fournit une information représentative du relief de la scène imagée sous forme matricielle en lignes et colonnes, et l'unité de traitement informatique est en outre configurée pour identifier pour chaque ligne ou portion de ligne de la reconstruction 3D le point le plus élevé ;
- l'unité de traitement informatique est configurée pour identifier un ou plusieurs rangs de végétaux dans la reconstruction 3D ;

- Il comprend en outre un capteur de mesure de la vitesse d'avancement dans la direction de trajet du véhicule, et le calculateur est configuré pour déterminer la distance parcourue le long de la direction de trajet entre deux reconstructions 3D successivement élaborées par l'unité de traitement informatique ;
- le calculateur est configuré pour fournir la consigne de commande de la hauteur du bras à partir de la moyenne desdites mesures précédemment enregistrées dans la mémoire ;
- le calculateur est configuré pour fournir la consigne de commande de la hauteur du bras à partir du maxima desdites mesures précédemment enregistrées dans la mémoire ;
- le calculateur est configuré pour calculer une densité foliaire indiquant, pour chaque intervalle de hauteur d'un ensemble d'intervalles successifs, le pourcentage de mesures parmi lesdites mesures précédemment enregistrées dans la mémoire qui indiquent une hauteur supérieure à la borne inférieure de l'intervalle de hauteur, et pour fournir la consigne de commande de la hauteur du bras à partir de la borne inférieure d'un intervalle de hauteur correspondant à un pourcentage seuil.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est une vue en perspective schématique d'un système selon un mode de réalisation possible de l'invention ;
- la figure 2 est un schéma illustrant le modèle géométrique d'un système d'imagerie stéréoscopique ;
- les figures 3 et 4 sont des schémas de modèles simplifiés du bras portant l'outil agricole et le capteur de mesure de hauteur ;
- la figure 5 est un schéma représentant une densité foliaire pouvant être déterminée dans un mode de réalisation possible de l'invention.

## EXPOSÉ DÉTAILLÉ DE MODES DE RÉALISATION PARTICULIERS

L'invention porte sur un système d'ajustement de la hauteur d'un outil agricole. Elle s'applique d'une manière générale à tout domaine où une mesure et un ajustement de hauteur sont nécessaires, notamment pour des outils de coupe ou d'arrachage de végétaux tels que ceux utilisés pour la castration de maïs ou pour la récolte céréalière.

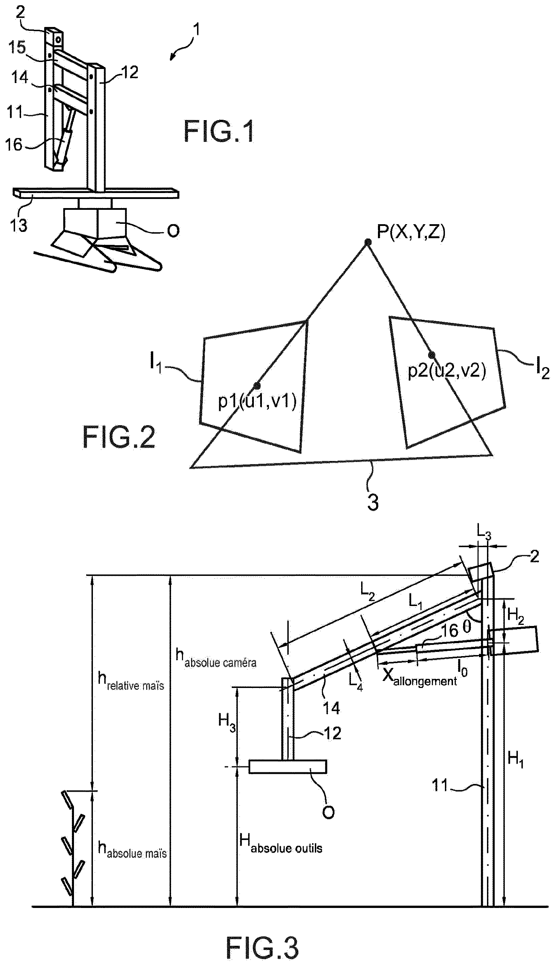

En référence à la figure 1, l'invention porte sur un système d'ajustement de la hauteur d'un outil agricole O. Ce système est formé d'un bras 1 apte à être commandé pour permettre d'élever et d'abaisser l'outil agricole, d'un capteur de mesure de hauteur 2, et d'un calculateur configuré pour fournir une consigne de commande de la hauteur du bras à partir des mesures réalisées par le capteur de mesure de hauteur.

L'outil agricole est typiquement un outil de coupe (par exemple un outil de coupe à couteaux) ou d'arrachage (par exemple à pneus ou à rouleaux) de végétaux. Un tel outil comprend généralement un instrument de coupe ou d'arrachage (couteaux, pneus ou rouleaux), un moteur d'entraînement de l'instrument, un guide de végétation et un carter de protection.

Pour la castration du maïs, le véhicule utilisé est un enjambeur qui permet de circuler entre les rangs de maïs et de couper ou d'arracher plusieurs rangs géniteurs femelles contigus à la fois. Un enjambeur classique comporte généralement deux ou quatre bras en amont du véhicule, chaque bras portant deux outils de coupe ou d'arrachage afin de castrer simultanément deux rangs contigus à la même hauteur, ce qui permet de gagner du temps mais peut pénaliser la coupe d'un ou des deux rangs, les deux rangs étant coupés à la même hauteur. Dans un mode de réalisation possible de l'invention, on n'utilise qu'un seul outil de coupe ou d'arrachage par bras afin d'individualiser la coupe par rang de culture.

Revenant à la figure 1, le bras 1 comprend un montant vertical arrière 11 formant la connexion structurelle principale avec le véhicule agricole, et un montant vertical avant 12 qui porte à son extrémité inférieure une barre horizontale de support d'outil agricole 13 qui s'étend perpendiculairement à la direction de trajet et sur laquelle est monté l'outil agricole O. Dans une variante de réalisation, le bras peut porter plusieurs outils agricoles, deux typiquement, pour la réalisation d'opérations simultanées sur plusieurs rangs de culture.

Les montants verticaux 11 et 12 sont reliés entre eux par des montants de liaison 14 et 15 montés de manière pivotante par rapport au montant vertical arrière 11. Un vérin 16 est monté entre le montant vertical arrière 11 et le montant de liaison 14, et fournit un moyen d'ajuster la hauteur du montant de liaison 14, et par là la hauteur du montant vertical avant 12 et de l'outil de coupe O, par pivotement du montant de liaison 14 par rapport au montant vertical arrière 11.

Le capteur de mesure de hauteur 2 est un système d'imagerie comprenant au moins une caméra montée de manière à pouvoir imager une scène située au-devant de l'outil agricole dans la direction de trajet du véhicule équipé du bras. Le système d'imagerie comprend en outre une unité de traitement informatique configurée pour élaborer, à partir des images délivrées par l'au moins une caméra, une reconstruction 3D représentative du relief de la scène imagée. L'unité de traitement informatique peut être déportée de l'au moins une caméra.

Dans un mode de réalisation possible, le système d'imagerie est un système à mesure du temps de vol comprenant une caméra temps de vol et une unité de traitement informatique configurée pour réaliser une mesure de temps de vol entre la scène imagée et la caméra et permettre la reconstruction 3D.

Un tel système de mesure délivre en temps-réel et à une cadence de plusieurs dizaines de Hz une carte 3D de l'environnement observée. Il s'agit d'un système actif qui illumine la scène à partir d'un flash infrarouge imperceptible pour l'homme mais capté par la caméra. Le pulse de lumière envoyé est réfléchi par les surfaces présent dans la scène et est capté par la matrice de pixels de la caméra. L'unité de traitement informatique calcule le temps de retour du pulse sur chaque pixel, en général par un calcul de décalage de phase. Ainsi pour chaque pixel, on établit la distance entre la caméra et le point de la surface ayant réfléchi le pulse. En effet, le temps de retour correspond au temps de trajet aller/retour de l'onde lumineuse entre la caméra et la surface. Cette technologie est très similaire aux technologies Lidar (scanner laser à balayage) avec l'avantage essentiel de disposer d'une image 3D dont les pixels sont acquis simultanément, ce qui s'avère avantageux dans le cadre de l'invention où le système de mesure en mouvement.

La principale limitation de cette technologie à mesure de temps de vol concerne la portée, quelques mètres en environnement favorable, et encore plus limitée en environnement extérieur (perturbations du capteur par le rayonnement infrarouge solaire). Mais du fait de la courte distance entre la caméra et la surface imagée ainsi que l'orientation de la caméra vers le sol (forte limitation des risques d'éblouissement) permettent de contourner cette limitation.

Dans un autre mode de réalisation possible, le système d'imagerie est un système stéréoscopique comprenant deux caméras montées de manière à pouvoir imager, à partir de deux points de vue distants, une même scène située au-devant de l'outil agricole dans la direction de trajet du véhicule équipé du bras. Les deux caméras sont portées par une tête stéréoscopique. L'unité de traitement informatique est alors configurée pour élaborer la reconstruction 3D.

Les caméras du système d'imagerie stéréoscopique produisent au même instant deux photographies jumelles, appelées couple stéréoscopique, légèrement décalées spatialement. Celles-ci vont permettre de restituer le relief de la canopée selon le principe suivant illustré sur la figure 2 et qui comprend les étapes suivantes :

- l'étalonnage du système de prise de vue ;
- la rectification des images ;
- la mise en correspondance de points homologues entre les deux images (issus de la projection d'un même point de l'environnement) ;
- la reconstruction du point 3D de l'environnement à partir des paires de points homologues.

La ligne de base 3 entre les deux caméras étant supposée fixe, l'étape d'étalonnage est faite préalablement à la campagne de reconstruction et reste valable tant que la stabilité mécanique de la tête stéréo est garantie. Les étapes suivantes sont réalisées à chaque instant pour produire une nouvelle reconstruction 3D de l'environnement pour prendre en compte un changement soit de la position du véhicule soit de la surface observée.

L'étape d'étalonnage peut être réalisée en observant un objet connu (une mire) sous différents angles et vu simultanément par les deux caméras. La mise en correspondance sur chaque paire d'image de plusieurs points caractéristiques de la mire permet d'estimer la matrice de projection de chaque caméra (paramètres intrinsèques) ainsi que la transformation géométrique reliant les deux caméras (paramètres extrinsèques).

Les paramètres issus de l'étalonnage permettent d'appliquer une fonction de rectification qui aligne les lignes de la caméra gauche avec celles de la caméra droite : un point P de l'environnement se projetant sur la ligne i de la caméra 1 se projettera sur la ligne i de la caméra 2. Cette opération permet d'accélérer et de rendre plus robuste l'appariement entre les points des deux images correspondant à un même point 3D. La transformation choisie doit veiller à préserver la qualité du signal contenu dans l'image (minimisation du lissage et de l'interpolation). Un exemple de ce type d'algorithme est présenté dans l'article de Loop et Chang, intitulé « Computing rectifying homographies for stereo vision » Int. Conférence CVPR, 1999.

Une fois les deux images rectifiées, une mise en correspondance des images I1 et I2 du couple d'images stéréoscopiques fourni par les caméras est alors réalisée dont le but est de retrouver les points homologues p1, p2 entre les deux images, c'est-à-dire les projections des mêmes points P de la scène imagée. On identifie ainsi que le point p1(u1, v1) dans l'image gauche I1 et le point p2(u2, v2) dans l'image droite I2 sont la projection d'un même point P de la scène imagée. Les coordonnées X, Y, Z de ce point P peuvent alors être calculée.

Pour ce faire, la première image I1 est parcourue et pour chaque pixel de cette image, on recherche dans la deuxième image I2 acquise au même instant le pixel correspondant au même point physique. Grâce à la rectification, ce pixel se trouve sur la même ligne de la deuxième image I2 que le pixel d'origine de la première image I1. Cette contrainte réduit les temps de recherche et les risques d'erreur. Pour effectuer la recherche, on considère un voisinage du pixel d'origine et on recherche le long de la ligne le pixel ayant le voisinage le plus ressemblant. Différents scores de corrélation ont été proposés dans la littérature, compromis entre qualité et rapidité. Cette recherche est itérée pour tous les pixels de la ligne de l'image d'origine, puis à l'ensemble des lignes de cette même image. Des contraintes d'ordre entre appariements successifs ainsi que des algorithmes dits « globaux » permettent de consolider les appariements réalisés en éliminant les résultats aberrants. Pour chaque appariement, on peut sauvegarder la distance entre les colonnes des deux pixels appariés : on parle de disparité, cette disparité étant linéairement liée à la profondeur du point 3D correspondant.

Au cours de la dernière étape, pour chaque appariement réalisé entre les deux images et en utilisant la connaissance des paramètres d'étalonnage du système, on peut reconstruire par triangulation le point 3D correspondant. Pour tous les appariements réalisés entre les deux images, on reconstruit un ensemble de points 3D dont les coordonnées sont exprimées dans le repère d'une des caméras (ou dans un repère arbitraire rigidement lié à une des caméras).

En orientant l'au moins une caméra du système d'imagerie (système stéréoscopique ou à mesure de temps de vol) vers les rangs de maïs, les points 3D reconstruits correspondent à des points de la canopée. On peut ainsi reconstruire une surface s'appuyant sur ces points 3D reconstruits et ainsi modéliser la canopée de la scène imagée. Une fois reconstruite, cette surface peut être analysée pour déterminer les lignes de crêtes reliant les sommets des pieds appartenant à un même rang et les vallées correspondant à l'espace inter-rangs. De plus, pour faciliter la recherche de ces zone de courbures maximales, la surface 3D reconstruite étant exprimée dans le repère de l'au moins une caméra et pouvant donc être exprimée dans le repère du véhicule, les lignes de crête et les vallées recherchées sont dans une direction parallèle au déplacement du véhicule.

En fonction de la largeur du champ de vue de l'au moins une caméra, plusieurs rangs peuvent être imagés simultanément. Le système d'imagerie peut ainsi être adapté pour permettre d'imager et de mesurer simultanément la hauteur de plusieurs rangs de culture.

La reconstruction 3D fournit ainsi une information représentative du relief de la scène imagée sous forme matricielle en lignes et colonnes où chaque point de la matrice fournit une information représentative de la distance entre le système d'imagerie (plus précisément le point milieu entre les caméras sur la ligne de base 3 dans le cas d'un système stéréoscopique) et le sommet des végétaux présents dans la scène imagée.

L'unité de traitement informatique peut être configurée pour identifier pour chaque ligne ou portion de ligne de la reconstruction 3D le point le plus élevé, ou calculer pour chaque ligne ou portion de ligne de la reconstruction 3D la moyenne des points présents sur la ligne ou portion de ligne, de manière à fournir l'information de mesure de hauteur.

Dans un mode de réalisation de l'invention, l'au moins une caméra du système d'imagerie est montées de manière à être fixe par rapport au véhicule agricole. Comme représenté sur les figures 1 et 3, elle peut notamment être montée sur le montant vertical arrière 11 du bras 1 qui sert de connexion structurelle principale avec le véhicule agricole.

Dans ce cas de figure, la position de l'au moins une caméra du système d'imagerie 2 est connue dans le repère absolu du véhicule et plus particulièrement sa hauteur absolue $h_{absolue\ caméra}$ qui est constante. La reconstitution de la surface 3D de la canopée au niveau des plants en amont de l'outil O permet de connaître la hauteur relative $h_{relative\ maïs}$ du sommet des végétaux par rapport à la caméra. Ainsi on obtient la hauteur absolue $h_{absolue\ maïs}$ du sommet des plants avec la relation :

$$h_{absolue\ maïs} = h_{absolue\ caméra} - h_{relative\ maïs}\text{, avec } h_{relative\ maïs}\text{ positif.} \quad (1)$$

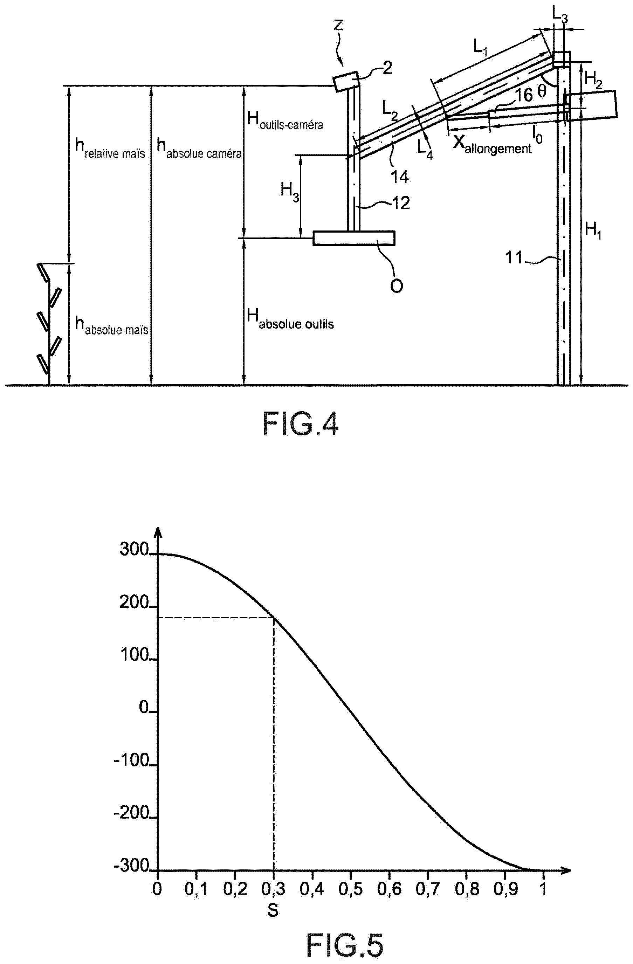

Dans un autre mode de réalisation représenté sur la figure 4, l'au moins une caméra du système d'imagerie est montée de manière à être fixes par rapport à l'outil de coupe O. Comme représenté sur la figure 4, elle peut notamment être montée sur le sommet du montant vertical avant 12 du bras 1.

Dans ce cas de figure, la hauteur absolue $h_{absolue\ caméra}$ de la caméra varie. Grâce à la reconstruction de la surface 3D de la canopée, on connait la hauteur relative $h_{relative\ maïs}$ du sommet du maïs par rapport à la caméra. Ainsi, on peut déduire la hauteur absolue $h_{absolue\ maïs}$ du sommet des plants avec la relation :

$$h_{absolue\ maïs} = h_{absolue\ caméra} - h_{relative\ maïs}\text{, avec } h_{relative\ maïs}\text{ positif.} \quad (1)$$

Dans ce cas, il est ici nécessaire de calculer la hauteur absolue $h_{absolue}$ caméra de la caméra, qui s'exprime par :

$$h_{absolue\ caméra} = h_{absolue\ outils} + H_{outils-caméra} \quad (2)$$

Avec $h_{absolue\ outils}$ calculé ultérieurement et $H_{outils-caméra}$ la hauteur constante entre le ou les outils O et la caméra.

Un modèle simplifié du bras avec le ou les outils O et le capteur de mesure de hauteur en amont dans la direction de trajet est proposé en figure 2. Les acquisitions sont réalisées par exemple toutes les millisecondes. En revanche, la consigne est calculée par exemple toutes les 100 ms, à partir d'un certain nombre d'acquisitions précédant le calcul. Un variateur couplé à un moteur peut être utilisé pour commander en tension l'allongement du vérin 16, ici électrique. La tension envoyée au variateur est reliée à la position angulaire moteur par la relation :

$$\theta_{moteur} = \frac{1}{U_{\max\ variateur}} \left( 360 \frac{C_{vérin}}{p} \right) U_{variateur} \tag{3}$$

Avec $U_{\max\ variateur}$ la tension maximale qui peut être envoyée au variateur (10V par exemple), $C_{vérin}$ la course du vérin électrique (300 mm par exemple) et p le pas de la vis du moteur (10mm/rev par exemple). L'invention s'étend toutefois à d'autres types de vérins, notamment aux vérins hydrauliques.

Lors d'une acquisition, on récupère l'allongement du vérin 16 grâce à un capteur de position angulaire, par exemple un résolveur, puis dans le cas de la figure 4, il est nécessaire de retrouver la hauteur absolue $h_{absolue\ outils}$ de l'outil O par géométrie pour en déduire la hauteur absolue $h_{absolue\ maïs}$ du maïs. Lors de la boucle de calcul de la consigne, les hauteurs absolues du maïs peuvent être traitées selon différentes stratégies, dont des exemples seront présentés ci-après, pour obtenir la consigne de hauteur de coupe, c'est-à-dire la consigne de hauteur absolue des outils. Cette dernière est ensuite convertie en allongement de vérin puis en tension qui est envoyée au variateur.

L'objectif est donc d'abord de connaître la relation entre l'allongement du vérin et la hauteur absolue des outils ainsi que celle entre la hauteur absolue des outils et la hauteur absolue du maïs, afin de pouvoir appliquer les différentes stratégies aux hauteurs absolue du maïs. Le capteur de position du moteur permet de connaître le nombre d'incréments $n_{incréments}$ du moteur pilotant le vérin 16 qui est à convertir en position moteur $\theta_{moteur}$ puis en allongement de vérin $x_{allongement}$ grâce aux formules :

$$\theta_{moteur} = \frac{2\pi}{2^m} n_{incréments} - \theta_{moteur\ initiale} \tag{4}$$

$$x_{allongement} = \frac{p}{2\pi} \theta_{moteur} \tag{5}$$

Avec m l'unité d'incréments (20 pour le moteur utilisé), p le pas de vis (10mm/rev pour le vérin utilisé) et $\theta_{moteur\ initiale}$ la position initiale du moteur.

Pour calculer $h_{absolue\ outils}$ en fonction de $x_{allongement}$, on utilise l'angle $\theta$ entre le montant vertical arrière 11 et le montant de liaison 14. Par géométrie, on obtient la relation suivante :

$$\left( l_0 + x_{allongement} \right)^2 = L_1^2 + L_3^2 + L_4^2 + H_2^2 + 2sin\theta( L_1 L_3 - L_4 H_2 ) - 2cos\theta(L_1 H_{2} + L_3 L_4) \tag{6}$$

D'où,

$$\left( l_0 + x_{allongement} \right)^2 = L_1{}^2 + L_3{}^2 + L_4{}^2 + H_2{}^2 + 2sin(\theta - \alpha)\sqrt{(L_1 L_3 - L_4 H_2)^2 + (L_1 H_2 + L_3 L_4)} \tag{7}$$

Avec

$$\alpha = atan\left( \frac{\sin\alpha}{\cos\alpha} \right) = atan\left( \frac{2(L_1 H_{2} + L_3 L_4)}{2( L_1 L_3 - L_4 H_2)} \right)$$

Donc:

$$\theta = \text{asin}\left(\frac{\left(l_0 + x_{allongement}\right)^2 - L_1^2 - L_3^2 - L_4^2 - H_2^2}{2\sqrt{(L_1 L_3 - L_4 H_2)^2 + (L_1 H_2 + L_3 L_4)}}\right) + \text{atan}\left(\frac{L_1 H_{2+} L_3 L_4}{L_1 L_3 - L_4 H_2}\right)$$

$$(8)$$

De plus, on a :

$$cos\theta = \frac{H_1 + H_2 - H_3 - h_{absolue\ outils}}{L_2}$$

$$(9)$$

Donc on obtient la relation suivante, nécessaire dans le cas de la figure 4 :

$$h_{absolue\ outils} = H_1 + H_2 - H_3 - L_2\ cos\theta$$

$$(10)$$

D'autre part, une fois que la consigne de hauteur a été calculée grâce aux différentes stratégies, c'est-à-dire la hauteur $h_{absolue\ outils}$ à laquelle les outils doivent se trouver au moment où la plante à couper se situe au niveau des outils, il est nécessaire de connaître la consigne qui correspond en termes d'allongement du vérin $x_{allongement}$ Pour cela, grâce à la relation (9) on calcule l'angle $\theta$ nécessaire pour obtenir la hauteur $h_{absolue\ outils}$ désirée. Puis l'équation (6) permet de déduire (11) :

$$x_{allongement}$$
$$= \sqrt{L_1^2 + L_3^2 + L_4^2 + H_2^2 + 2sin\theta(L_1 L_3 - L_4 H_2) - 2cos\theta(L_1 H_{2+} L_3 L_4)} - l_0$$

$$(11)$$

Par ailleurs, on peut prendre soin de venir borner la consigne d'allongement entre 0 et la course du vérin (300 mm pour le vérin utilisé) afin de ne pas obtenir des consignes négatives ou supérieures à l'allongement maximal du vérin.

Enfin, on calcule la tension $U_{variateur}$ entre $U_{min\ variateur}$ et $U_{max\ variateur}$ (entre 0 et 10V pour le variateur utilisé), à envoyer au variateur grâce à la formule (12) :

$$U_{variateur} = \frac{U_{max\ variateur} - U_{min\ variateur}}{C_{vérin}} x_{allongement} + U_{min\ variateur}$$

$$(12)$$

On détaille ci-après l'élaboration par le calculateur de la consigne de commande de la hauteur du bras (détermination de $h_{absolue\ outils}$ et par là de $U_{variateur}$) à partir des mesures réalisées par le capteur de mesure de hauteur (mesure de $h_{relative\ maïs}$).

L'objectif de la coupe aux couteaux est de dégager la vue sur le rang en coupant juste assez de feuilles et de panicules pour que celles-ci puissent encore repousser par la suite. La coupe doit donc être relativement homogène, sans créer trop d'irrégularités. La hauteur de coupe idéale se situe aux trois quarts de la panicule. Ceci suppose de repérer la hauteur de la base et du sommet de la panicule pour en repérer les trois quarts, ce qui est difficilement reproductible avec des capteurs, surtout étant donné que la panicule peut être cachée au sein du cornet. Par ailleurs, imposer une hauteur de coupe à un certain nombre de centimètres en dessous du sommet du pied n'est pas adapté car la panicule peut aussi bien être proche de ce sommet que beaucoup plus basse. Il est donc nécessaire d'obtenir une mesure relative, adaptée à chaque pied de maïs et à différentes architectures de plantes (port dressé, feuilles retombantes,...).

Lors de l'arrachage, il est nécessaire d'enlever toutes les panicules qui ont repoussées. Comme les panicules repoussent plus vite que les feuilles, l'objectif est que la hauteur des feuilles reste relativement homogène afin que dépassent les panicules. Pour cela, il faut limiter les variations brusques de hauteur lors de la coupe afin de pouvoir ensuite suivre ces variations lors de l'arrachage. Pour l'arrachage, il est nécessaire de venir placer les rouleaux ou les pneus au plus près de la cime des feuilles afin d'arracher les panicules qui dépassent sans enlever trop de feuilles.

Plusieurs stratégies peuvent donc être envisagées selon leur pertinence pour la coupe ou l'arrachage. Chaque stratégie peut reposer sur le fait que le temps écoulé entre deux reconstructions 3D élaborées par le système d'imagerie de mesure de hauteur est converti en distance parcourue grâce à la vitesse calculée à chaque instant. Le système d'imagerie élaborant des reconstructions 3D de scènes situées en amont du ou des outils, la consigne à envoyer à l'actionneur à un instant t n'est pas calculée grâce à la reconstruction élaborée à ce même instant t mais grâce aux reconstructions antérieures. Ainsi, les reconstructions sont mémorisées au fur et à mesure puis la consigne est calculée à partir d'un petit échantillon de reconstructions de scènes imagées dont un point au moins est à une distance de la position actuelle de l'outil de coupe, dans la direction de trajet du véhicule, inférieure à une distance prédéterminée $d_{Ech}$.

La consigne envoyée est ainsi calculée à partir des reconstructions antérieures réalisées alors que le système d'imagerie imageait la canopée sur une distance $d_{Ech}$ dans la direction de trajet du véhicule en amont de la position actuelle du ou des outils.

Ainsi, le système selon l'invention comprend en outre une mémoire dans laquelle sont enregistrées les mesures réalisées par le capteur de mesure de hauteur, et le calculateur est configuré pour fournir la consigne de commande de la hauteur du bras sur la base de mesures précédemment enregistrées dans la mémoire et correspondant à plusieurs reconstructions 3D de scènes imagées dont un point au moins est à une distance de la position actuelle de l'outil de coupe inférieure à la distance prédéterminée $d_{Ech}$.

Dans le cadre de ce mode de réalisation, il importe de connaître précisément la vitesse de déplacement à chaque instant d'élaboration d'une reconstruction 3D afin de travailler non pas en temps écoulé mais en distance parcourue. Pour ce faire, le système peut comprendre un capteur de mesure de la vitesse d'avancement dans la direction de trajet du véhicule, et le calculateur est alors configuré pour déterminer la distance parcourue le long de la direction de trajet entre deux mesures successivement réalisées par le capteur de mesure de hauteur. En d'autres termes, il est possible d'horodater les échantillons en mémoire avec la vitesse instantanée, pour ensuite permettre de déterminer, au moment du calcul de la consigne de hauteur, quels sont les échantillons correspondant aux reconstructions 3D réalisées alors que le système d'imagerie imageait la canopée sur la distance $d_{Ech}$ dans la direction de trajet du véhicule en amont de la position actuelle du ou des outils (plus ou moins d'échantillons selon que le déplacement est rapide ou lent).

Le capteur de mesure de la vitesse d'avancement peut être constitué d'un capteur inductif de proximité associé à une roue en plastique fixée dans la jante d'une roue du véhicule et sur le pourtour de laquelle des pions métalliques sont agencés. A chaque passage devant un pion métallique, le signal en sortie du capteur est modifié. Ainsi, la vitesse d'avancement peut être déduite en calculant le temps écoulé entre deux fronts montants du signal de sortie, c'est-à-dire entre deux pions métalliques, connaissant la longueur de la corde entre ces deux points.

Pour chaque acquisition, on mémorise la hauteur absolue maximale du maïs $h_{absolue\ maïs}$. Puis on calcule la consigne de hauteur $h_{absolue\ outils}$ à laquelle les outils doivent venir couper la plante.

Ce calcul peut être réalisé de différentes manières selon la stratégie choisie.

Dans un mode de réalisation, le calculateur est configuré pour fournir la consigne de commande de la hauteur du bras à partir de la moyenne desdites mesures précédemment réalisées par le capteur de mesure de hauteur sur ladite distance prédéterminée $d_{Ech}$.

Ce mode de réalisation correspond à une stratégie dite « moyenne » selon laquelle pour les acquisitions de $d_{Ech}$, on calcule la hauteur moyenne du maïs. La consigne envoyée $h_{absolue\ outils}$ est ensuite égale à cette hauteur moyenne à laquelle on peut soustraire une hauteur $h_{Offset}$ qui dépend de la variété coupée. Cette stratégie a pour avantage d'englober les vides entre deux pieds. Elle est destinée à être utilisée pour la coupe aux couteaux.

Dans un autre mode de réalisation, le calculateur est configuré pour fournir la consigne de commande de la hauteur du bras à partir du maxima desdites mesures précédemment réalisées par le capteur de mesure de hauteur sur ladite distance prédéterminée $d_{Ech}$.

Ce mode de réalisation correspond à une stratégie dite « maximum » selon laquelle pour les acquisitions de $d_{Ech}$, on repère la hauteur maximale parmi les hauteurs de maïs sur cet échantillon. La consigne envoyée $h_{absolue\ outils}$ est ensuite égale à cette hauteur maximale à laquelle on peut soustraire une hauteur $h_{Offset}$ qui dépend de la variété coupée. Cette stratégie est plutôt destinée à l'arrachage aux rouleaux. Il a effectivement pu être vérifié que les panicules mesurant environ 10 mm de diamètre ne sont pas détectables par le rideau de lumière, seules les feuilles sont détectées en dessinant un profil relativement rectiligne suite à la coupe aux couteaux. L'objectif est donc ici de venir placer les rouleaux juste au sommet de ce profil, sachant que tout ce qui dépasse ne peut être que la panicule et sera donc arraché.

Dans encore un autre mode de réalisation, le calculateur est configuré pour calculer une densité foliaire indiquant, pour chaque intervalle de hauteur d'un ensemble d'intervalles successifs, le pourcentage de mesures parmi lesdites mesures précédemment réalisées par le capteur de mesure de hauteur sur ladite distance prédéterminée $d_{Ech}$ qui indiquent une hauteur supérieure à la borne inférieure de l'intervalle de hauteur, et pour fournir la consigne de commande de la hauteur du bras à partir de la borne inférieure de l'intervalle de hauteur correspondant à un pourcentage seuil.

Ce mode de réalisation correspond à une stratégie dite « densité foliaire » selon laquelle pour les acquisitions de $d_{Ech}$, la hauteur minimale parmi les hauteurs de maïs sur cet échantillon est identifiée. Puis une boucle est créée qui définit une hauteur courante égale à la hauteur minimale incrémentée de 5 mm par exemple à chaque tour de boucle et le pourcentage d'acquisitions qui correspondent à une hauteur supérieure à cette nouvelle hauteur courante est calculé. Ainsi, pour la hauteur minimale de l'échantillon, 100% des acquisitions de l'échantillon ont une hauteur supérieure à la hauteur minimale. Puis au fur et à mesure que la hauteur courante augmente, de moins en moins d'acquisitions ont une hauteur supérieure à la hauteur courante. Ce pourcentage correspond à ce que l'on appelle une densité foliaire. On a représenté sur la figure 5 un exemple de densité foliaire pouvant être déterminée dans ce mode de réalisation. On retrouve en ordonnée la hauteur des plantes $h_{relative\ maïs}$ et en abscisse le pourcentage de plantes de hauteur supérieure à cette hauteur $h_{relative\ maïs}$. On définit un seuil S à partir duquel on estime que la densité foliaire est suffisamment faible (30% dans l'exemple de la figure 5) pour correspondre à la hauteur optimale de coupe : en effet, plus on se rapproche du sommet de la plante, plus la densité foliaire est supposée diminuer. On relèvera que réciproquement la densité foliaire peut être estimée en partant de la hauteur maximale et en venant vérifier le pourcentage d'acquisitions présentant une hauteur inférieure.

La consigne envoyée $h_{absolue\ outils}$ est ensuite égale à la hauteur courante correspondant à ce seuil S (autour de +175mm sur l'exemple de la figure 5), à laquelle on peut soustraire une hauteur $h_{Offset}$ qui dépend de la variété coupée. Cette stratégie est destinée à être utilisée pour la coupe aux couteaux. Elle se rapproche davantage de la mesure idéale des trois quarts de panicules : en effet, on imagine qu'à cette hauteur idéale il n'y a plus qu'un certain pourcentage de feuilles. De plus, elle prend en compte l'architecture de la plante : pour une variété à feuilles retombantes, il y aura davantage de feuilles autour de la panicule que pour une variété à port dressé.

L'invention n'est pas limitée au système tel que précédemment décrit mais s'étend également à un véhicule, notamment un enjambeur, équipé d'un ou plusieurs systèmes selon l'invention. Elle s'étend également à un procédé d'ajustement de la hauteur d'un outil agricole selon la revendication 12.

L'invention apporte un gain en précision en venant déterminer une consigne de hauteur quantifiée, précise et adaptée à chaque pied de maïs grâce au développement d'algorithmes de calcul adaptés aux enjeux de la coupe et de l'arrachage.

De plus, l'invention apporte également un gain en productivité puisque le système peut être reproduit sur plusieurs bras afin de couper ou d'arracher plusieurs rangs simultanément, indépendamment les uns des autres.

Enfin, ce système permet de réduire la pénibilité du travail de l'agriculteur qui n'a plus à guetter en permanence les hauteurs de maïs et ajuster la hauteur des outils.

Ainsi, ce système améliore la rentabilité des opérations de castration mécanique et réduit le nombre de panicules restantes à arracher à la main.

**Revendications**

1. Système d'ajustement de la hauteur d'un outil agricole (O), comprenant :

   - un bras (1) apte à être commandé pour permettre d'élever et d'abaisser l'outil agricole,
   - un capteur de mesure de hauteur, lequel capteur est un système d'imagerie (2) comprenant :

     o au moins une caméra montée de manière à pouvoir imager une scène située au-devant de l'outil agricole dans une direction de trajet d'un véhicule équipé du bras, et
     o une unité de traitement informatique configurée pour élaborer, à partir des images délivrées par l'au moins une caméra, une reconstruction 3D représentative du relief de la scène imagée,

   **caractérisé en ce qu'**il comprend en outre :

   - une mémoire dans laquelle sont enregistrées les mesures réalisées par le capteur de mesure de hauteur, et
   - un calculateur configuré pour fournir une consigne de commande de la hauteur du bras sur la base de mesures précédemment enregistrées dans la mémoire qui correspondent à plusieurs reconstructions 3D de scènes imagées dont un point au moins est à une distance de la position actuelle de l'outil de coupe inférieure à une distance prédéterminée.

2. Système selon la revendication 1, dans lequel le système d'imagerie est un système d'imagerie stéréoscopique (2) comprenant deux caméras montées de manière à pouvoir imager la même scène à partir de deux points de vue distants, et dans lequel l'unité de traitement informatique est configurée pour élaborer la reconstruction 3D à partir d'un couple d'images stéréoscopiques délivrées par les caméras.

**3.** Système selon la revendication 1, dans lequel l'au moins une caméra du système d'imagerie est une caméra temps de vol, l'unité de traitement informatique étant configurée pour réaliser une mesure de temps de vol entre la scène imagée et la caméra.

**4.** Système selon l'une des revendications 1 à 3, dans lequel la reconstruction 3D fournissant une information représentative du relief de la scène imagée sous forme matricielle en lignes et colonnes, l'unité de traitement informatique est en outre configurée pour identifier pour chaque ligne ou portion de ligne de la reconstruction 3D le point le plus élevé.

**5.** Système selon l'une des revendications 1 à 4, dans lequel l'unité de traitement informatique est configurée pour identifier un ou plusieurs rangs de végétaux dans la reconstruction 3D.

**6.** Système selon l'une des revendications 1 à 5, comprenant en outre un capteur de mesure de la vitesse d'avancement dans la direction de trajet du véhicule, et dans lequel le calculateur est en outre configuré pour déterminer la distance parcourue le long de la direction de trajet entre deux reconstructions 3D successivement élaborées par l'unité de traitement informatique.

**7.** Système selon l'une des revendications 1 à 6, dans lequel le calculateur est configuré pour fournir la consigne de commande de la hauteur du bras à partir de la moyenne desdites mesures précédemment enregistrées dans la mémoire.

**8.** Système selon l'une des revendications 1 à 6, dans lequel le calculateur est configuré pour fournir la consigne de commande de la hauteur du bras à partir du maxima desdites mesures précédemment enregistrées dans la mémoire.

**9.** Système selon l'une des revendications 1 à 6, dans lequel le calculateur est configuré pour calculer une densité foliaire indiquant, pour chaque intervalle de hauteur d'un ensemble d'intervalles successifs, le pourcentage de mesures parmi lesdites mesures précédemment enregistrées dans la mémoire qui indiquent une hauteur supérieure à la borne inférieure de l'intervalle de hauteur, et pour fournir la consigne de commande de la hauteur du bras à partir de la borne inférieure d'un intervalle de hauteur correspondant à un pourcentage seuil.

**10.** Système selon l'une des revendications 1 à 9, dans lequel l'outil agricole est un outil de coupe ou d'arrachage de végétaux, en particulier de maïs.

**11.** Véhicule équipé d'un système selon l'une des revendications 1 à 10.

**12.** Procédé d'ajustement de la hauteur d'un outil agricole (O) au moyen d'un système comprenant un bras (1) apte à être commandé pour permettre d'élever et d'abaisser l'outil agricole, comprenant les étapes :

- d'acquisition et d'enregistrement de mesures d'un capteur de mesure de hauteur, le capteur de mesure de hauteur étant un système d'imagerie (2) comprenant au moins une caméra montée de manière à pouvoir imager une scène située au-devant de l'outil agricole dans une direction de trajet d'un véhicule équipé du bras, et une unité de traitement informatique configurée pour élaborer, à partir des images délivrées par l'au moins une caméra, une reconstruction 3D représentative du relief de la scène imagée ;
- de détermination d'une consigne de commande de la hauteur du bras sur la base de mesures précédemment enregistrées qui correspondent à plusieurs reconstructions 3D de scènes imagées dont un point au moins est à une distance de la position actuelle de l'outil de coupe inférieure à une distance prédéterminée

**Patentansprüche**

**1.** System zur Höhenverstellung eines landwirtschaftlichen Anbaugerätes (O), umfassend:

- einen Arm (1), der imstande ist, gesteuert zu werden, um zu ermöglichen, das landwirtschaftliche Anbaugerät anzuheben und abzusenken,
- einen Höhenmesssensor, wobei der Sensor ein Bildgebungssystem (2) ist, umfassend:

° mindestens eine Kamera, die derart angebracht ist, um eine Szene abbilden zu können, die sich entgegen dem landwirtschaftlichen Anbaugerät in einer Fahrtrichtung eines mit dem Arm ausgestatteten Fahrzeugs befindet, und

° eine elektronische Verarbeitungseinheit, die konfiguriert ist, um aus den von der mindestens einen Kamera gelieferten Bildern eine 3D-Rekonstruktion auszuarbeiten, die repräsentativ für das Relief der abgebildeten Szene ist,

**dadurch gekennzeichnet, dass** es weiter umfasst:

- einen Speicher, in dem die durch den Höhenmesssensor ausgeführten Messungen gespeichert werden, und
- einen Rechner, der konfiguriert ist, um einen Steuerungssollwert für die Höhe des Armes auf der Grundlage von zuvor in dem Speicher gespeicherten Messungen bereitzustellen, die mehreren 3D-Rekonstruktionen von abgebildeten Szenen entsprechen, von denen mindestens ein Punkt in einem Abstand von der aktuellen Position des Schneideanbaugerätes ist, der geringer als ein vorbestimmter Abstand ist.

2. System nach Anspruch 1, wobei das Bildgebungssystem ein stereoskopisches Bildgebungssystem (2) ist, das zwei Kameras umfasst, die derart angebracht sind, um dieselbe Szene aus zwei beabstandeten Standpunkten aus abbilden zu können, und wobei die elektronische Verarbeitungseinheit konfiguriert ist, um die 3D-Rekonstruktion aus einem Paar an stereoskopischen Bildern auszuarbeiten, die durch die Kameras geliefert werden.

3. System nach Anspruch 1, wobei die mindestens eine Kamera des Bildgebungssystems eine Flugzeitkamera ist, wobei die elektronische Verarbeitungseinheit konfiguriert ist, um eine Flugzeitmessung zwischen der abgebildeten Szene und der Kamera durchzuführen.

4. System nach einem der Ansprüche 1 bis 3, wobei die 3D-Rekonstruktion, die eine Information bereitstellt, die repräsentativ für das Relief der abgebildeten Szene, in Matrix-Form in Zeilen und Spalten ist, die elektronische Verarbeitungseinheit weiter konfiguriert ist, um für jede Zeile oder jeden Zeilenabschnitt der 3D-Rekonstruktion den höchsten Punkt zu identifizieren.

5. System nach einem der Ansprüche 1 bis 4, wobei die elektronische Verarbeitungseinheit konfiguriert ist, um eine oder mehrere Pflanzenreihen in der 3D-Rekonstruktion zu identifizieren.

6. System nach einem der Ansprüche 1 bis 5, weiter einen Messsensor für die Vortriebsgeschwindigkeit in der Fahrtrichtung des Fahrzeugs umfassend, und wobei der Rechner weiter konfiguriert ist, um den zurückgelegten Abstand entlang der Fahrtrichtung zwischen zwei nacheinander von der elektronischen Verarbeitungseinheit ausgearbeiteten 3D-Rekonstruktionen zu bestimmen.

7. System nach einem der Ansprüche 1 bis 6, wobei der Rechner konfiguriert ist, um den Steuerungssollwert für die Höhe des Arms ausgehend von dem Mittelwert der zuvor in dem Speicher gespeicherten Messungen bereitzustellen.

8. System nach einem der Ansprüche 1 bis 6, wobei der Rechner konfiguriert ist, um den Steuerungssollwert für die Höhe des Armes ausgehend vom Höchstwert der zuvor in dem Speicher gespeicherten Messungen bereitzustellen.

9. System nach einem der Ansprüche 1 bis 6, wobei der Rechner konfiguriert ist, um eine Blattdichte zu berechnen, die für jedes Höhenintervall einer Reihe von aufeinanderfolgenden Intervallen den Prozentsatz an Messungen unter den zuvor im Speicher gespeicherten Messungen anzuzeigen, die eine Höhe größer als die untere Grenze des Höhenintervalls anzeigen, und um den Steuerungssollwert der Höhe des Armes ausgehend von der unteren Grenze eines Höhenintervalls bereitzustellen, das einem Schwellenprozentsatz entspricht.

10. System nach einem der Ansprüche 1 bis 9, wobei das landwirtschaftliche Anbaugerät ein Anbaugerät zum Schneiden oder Ausreißen von Pflanzen, insbesondere von Mais ist.

11. Fahrzeug, das mit einem System nach einem der Ansprüche 1 bis 10 ausgestattet ist.

12. Verfahren zur Höhenverstellung eines landwirtschaftlichen Anbaugerätes (O) anhand eines Systems, das einen Arm (1) umfasst, der imstande ist, gesteuert zu werden, um zu ermöglichen, das landwirtschaftliche Anbaugerät anzuheben und abzusenken, die folgenden Schritte umfassend:

- Erfassen und Speichern von Messungen eines Höhenmesssensors, wobei der Höhenmesssensor ein Bildgebungssystem (2) ist, das mindestens eine Kamera umfasst, die derart angebracht ist, um eine Szene abbilden zu können, die sich entgegen dem landwirtschaftlichen Anbaugerät in einer Fahrtrichtung eines mit dem Arm ausgestatteten Fahrzeugs befindet, und eine elektronische Verarbeitungseinheit, die konfiguriert ist, um aus den von der mindestens einen Kamera gelieferten Bildern eine 3D-Rekonstruktion auszuarbeiten, die repräsentativ für das Relief der abgebildeten Szene ist;

- Bestimmen eines Steuerungssollwerts für die Höhe des Armes auf der Grundlage von zuvor in dem Speicher gespeicherten Messungen, die mehreren 3D-Rekonstruktionen von abgebildeten Szenen entsprechen, von denen mindestens ein Punkt in einem Abstand von der aktuellen Position des Schneideanbaugerätes ist, der geringer als ein vorbestimmter Abstand ist.

## Claims

1. A system for adjusting the height of an agricultural implement (O), comprising:

   - an arm (1) capable of being controlled to allow raising and lowering the agricultural implement,
   - a height measurement sensor, which sensor is an imaging system (2) comprising:

     o at least one camera mounted so as to be able to image a scene located in front of the agricultural implement in a direction of travel of a vehicle equipped with the arm, and
     o a computer processing unit configured to develop, from the images delivered by the at least one camera, a 3D reconstruction representative of the relief of the imaged scene,

   **characterised in that** it further comprises

     - a memory in which the measurements made by the height measurement sensor are stored, and
     - a calculator configured to provide an arm height control setpoint based on measurements which are previously stored in the memory which correspond to several 3D reconstructions of imaged scenes of which at least one point is at a distance from the current position of the cutting implement which is less than a predetermined distance.

2. The system according to claim 1, wherein the imaging system is a stereoscopic imaging system (2) comprising two cameras mounted so as to be able to image the same scene from two distant viewpoints, and wherein the computer processing unit is configured to develop the 3D reconstruction from a pair of stereoscopic images delivered by the cameras.

3. The system according to claim 1, wherein the at least one camera of the imaging system is a time-of-flight camera, the computer processing unit being configured to make a time-of-flight measurement between the imaged scene and the camera.

4. The system according to one of claims 1 to 3, wherein the 3D reconstruction providing information representative of the relief of the scene imaged in matrix form in rows and columns, the computer processing unit is further configured to identify, for each line or line portion of the 3D reconstruction, the highest point.

5. The system according to one of claims 1 to 4, wherein the computer processing unit is configured to identify one or more rows of plants in the 3D reconstruction.

6. The system according to one of claims 1 to 5, further comprising a sensor for measuring the forward speed in the direction of travel of the vehicle, and wherein the calculator is further configured to determine the distance travelled along the direction of travel between two 3D reconstructions which are successively developed by the computer processing unit.

7. The system according to one of claims 1 to 6, wherein the calculator is configured to provide the arm height control setpoint from the average of said measurements which are previously stored in the memory.

8. The system according to one of claims 1 to 6, wherein the calculator is configured to provide the arm height control setpoint from the maxima of said measurements previously stored in the memory.

9. The system according to one of claims 1 to 6, wherein the calculator is configured to calculate a leaf density indicating, for each height interval of a set of successive intervals, the percentage of measurements from said measurements previously stored in the memory which indicate a height greater than the lower limit of the height interval, and to provide the arm height control setpoint from the lower limit of a height interval corresponding to a threshold percentage.

10. The system according to one of claims 1 to 9, wherein the agricultural implement is an implement for cutting or uprooting plants, in particular corn.

11. A vehicle equipped with a system according to one of claims 1 to 10.

12. A method for adjusting the height of an agricultural implement (O) by means of a system comprising an arm (1) capable of being controlled to allow raising and lowering the agricultural implement, comprising the steps of:

- acquiring and storing measurements from a height measurement sensor, the height measurement sensor being an imaging system (2) comprising at least one camera mounted so as to be able to image a scene located in front of the agricultural implement in a direction of travel of a vehicle equipped with the arm, and a computer processing unit configured to develop, from the images delivered by the at least one camera, a 3D reconstruction representative of the relief of the imaged scene;
- determining an arm height control setpoint based on previously stored measurements which correspond to several 3D reconstructions of imaged scenes of which at least one point is at a distance from the current position of the cutting implement which is less than a predetermined distance.

FIG.1

FIG.2

P(X,Y,Z)

$I_1$

p1(u1,v1)

p2(u2,v2)

$I_2$

3

$L_3$

2

$L_2$

$L_1$

$H_2$

$h_{absolue\ caméra}$

16 θ

$h_{relative\ maïs}$

$H_3$

$L_4$

$x_{allongement}$

$I_0$

14

12

$H_1$

O

11

$h_{absolue\ maïs}$

$H_{absolue\ outils}$

FIG.3

**FIG.4**

**FIG.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4197691 A
- US 4507910 A
- US 8381502 B
- AU 5387473 A

**Littérature non-brevet citée dans la description**

- **LOOP ; CHANG.** Computing rectifying homographies for stereo vision. *Int. Conférence CVPR,* 1999